# FASCICULE DE BREVET EUROPEEN

(11) **EP 0 655 370 B1**
(45) Date de publication et mention de la délivrance du brevet: **19.03.1997**
(21) Numéro de dépôt: 94402654.1
(22) Date de dépôt: 21.11.1994
(51) Int. Cl.: B60R 21/20

(54) **Procédé de fabrication d'un volant de direction, notamment pour un véhicule automobile**
Herstellungsverfahren für ein Lenkrad, insbesondere für ein Kraftfahrzeug
Manufacturing method of a steering wheel, especially for a motor vehicle

(30) Priorité: 25.11.1993 FR 9314120
(43) Date de publication de la demande: 31.05.1995
(73) Titulaire: ECIA - EQUIPEMENTS ET COMPOSANTS POUR L'INDUSTRIE AUTOMOBILE, F-25400 Audincourt (FR)
(72) Inventeur: Xolin, Frédéric, F-25400 Audincourt (FR); Goisset, Bernard, F-25310 Blamont (FR)
(74) Mandataire: Habasque, Etienne Joel Jean-François

(56) Documents cités:
- EP-A- 0 367 319

## Description

La présente invention concerne un procédé de fabrication d'un volant de direction notamment de véhicule automobile.

Plus particulièrement, l'invention se rapporte aux procédés de fabrication des volants de direction de véhicules automobiles qui comprennent une armature de volant munie d'une coupelle ouverte de réception d'un sac gonflable à l'état plié et d'un garnissage en matière plastique.

Les procédés de fabrication de ce type de volants de direction, connus dans l'état de la technique, consistent essentiellement à réaliser le volant de direction avec son armature et son garnissage, puis à fixer sur ce volant un module contenant au moins un sac gonflable sur lequel est ensuite fixé une plaque de garnissage pour former le coussin central du volant.

Ces différentes opérations de montage sont réalisées chez les constructeurs de véhicules.

On conçoit que ces différentes opérations de montage nécessitent l'assemblage des différents éléments de ce volant les uns à la suite des autres et que ces opérations présentent un certain nombre d'inconvénients, notamment au niveau du temps requis pour cet assemblage et de la présence d'organes de fixation tels que des rivets ou autres par la fixation de ces éléments sur l'armature du volant.

Le but de l'invention est donc de résoudre ces problèmes.

A cet effet, l'invention a pour objet un procédé de fabrication d'un volant de direction, notamment de véhicule automobile, du type comportant une armature de volant munie d'une coupelle ouverte de réception d'au moins un sac gonflable à l'état plié et d'un garnissage en matière plastique, caractérisé en ce qu'il comporte les étapes suivantes :
- on réalise l'armature de volant avec la coupelle de réception;
- on dispose au moins le sac gonflable à l'état plié dans la coupelle;
- on obture l'ouverture de la coupelle à l'aide d'un matériau d'étanchéité déchirable lors du gonflage du sac;
- on dispose l'armature de volant avec sa coupelle munie du sac et du matériau d'étanchéité dans un moule de fabrication du garnissage par injection de matière plastique; et
- on injecte de la matière plastique dans le moule pour former le garnissage autour de l'armature.

Selon un autre aspect, l'invention a également pour objet un volant de direction de véhicule automobile obtenu selon ce procédé.

L'invention sera mieux comprise à la lecture de la description qui va suivre, donnée uniquement à titre d'exemple et faite en se référant aux dessins annexés, sur lesquels :

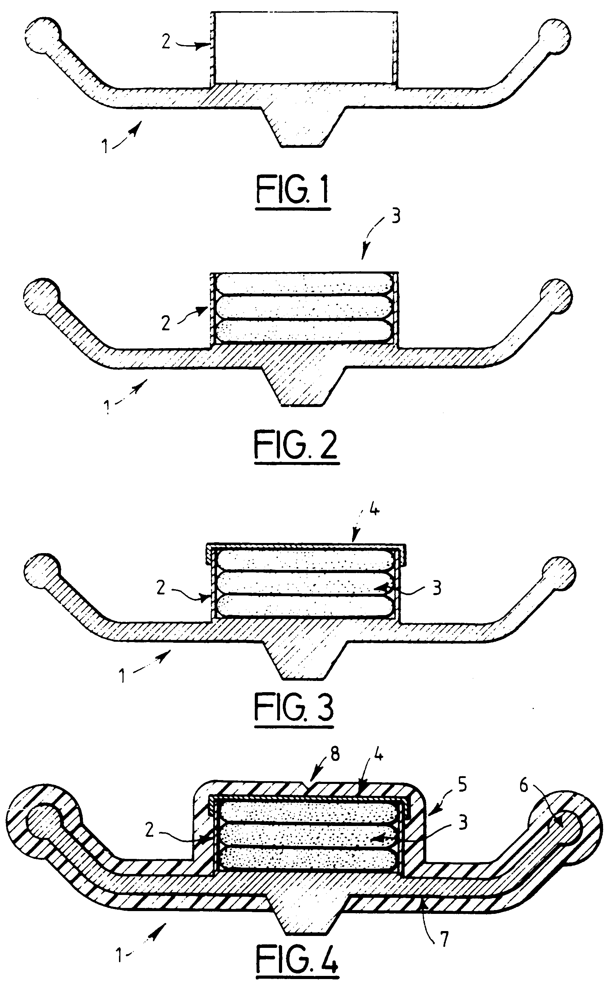

- les Fig.1 à 4 illustrent les différentes étapes d'un procédé de fabrication d'un volant de direction selon l'invention.

Ainsi qu'on peut le voir sur ces figures, un volant de direction de véhicule automobile, comporte de manière classique une armature de volant désignée par la référence générale 1 réalisée par exemple par moulage par injection de tout alliage approprié dans un moule.

Cette armature est réalisée avec une coupelle 2 de réception d'un sac gonflable à l'état plié au niveau de son moyeu de liaison au reste de l'arbre de direction du véhicule.

Avantageusement, la coupelle est venue de matière avec l'armature lors de la fabrication de celle-ci.

L'étape suivante du procédé de fabrication selon l'invention, consiste, comme cela est illustré sur la figure 2, à disposer au moins le sac gonflable à l'état plié, désigné par la référence générale 3, dans la coupelle 2 de l'armature 1.

On notera à cet égard qu'un générateur de gaz peut également être disposé dans cette coupelle, de façon classique, ce générateur de gaz étant relié au reste des circuits de contrôle/commande du véhicule par l'intermédiaire par exemple de moyens de connexion électriques.

Cependant, il est connu dans l'état de la technique que le générateur de gaz peut également être disposé dans un autre organe du véhicule, tel que par exemple l'arbre de direction.

Une fois que ce sac gonflable et éventuellement le générateur de gaz sont disposés dans la coupelle 2 de l'armature 1, on obture l'ouverture de cette coupelle à l'aide d'un matériau d'étanchéité déchirable lors du gonflage du sac, comme cela est illustré sur la Fig.3.

Ce matériau d'étanchéité peut par exemple se présenter sous la forme d'un film 4 tendu sur l'ouverture de la coupelle 2 au-dessus du sac gonflable 3.

Le bord périphérique de ce film est fixé sur les bords correspondants de la coupelle par tous moyens appropriés comme par exemple par l'intermédiaire d'un jonc élastique ou autre.

Ensuite, on dispose cette armature avec sa coupelle munie du sac gonflable 3 et du film d'étanchéité 4 dans un moule de fabrication du garnissage du volant par injection de matière plastique et on injecte de la matière plastique dans le moule pour former le garnissage désigné par la référence générale 5 sur la Fig.4, autour de l'ensemble de l'armature, c'est à dire autour de la jante 6 du volant, des bras par exemple 7 de liaison de cette jante au reste de l'armature de volant, etc..

Bien entendu, le moule peut également être conçu pour former des zones de rupture préférentielles 8 de ce garnissage, en regard de l'ouverture de la coupelle de l'armature, ces zones se déchirant lors du gonflable du sac, comme cela est classique.

On conçoit alors que ce procédé de fabrication permet d'obtenir un volant de direction muni d'un garnissage en matière plastique d'une seule pièce, qui peut être fixé directement sur l'arbre de direction du véhicule et qui est livré chez les constructeurs de véhicules à l'état assemblé, ce qui permet de résoudre les problèmes de montage mentionnés précédemment.

## Revendications

1. Procédé de fabrication d'un volant de direction, notamment de véhicule automobile, du type comportant une armature de volant (1) munie d'une coupelle ouverte (2) de réception d'au moins un sac gonflable (3) à l'état plié et d'un garnissage (5) en matière plastique, caractérisé en ce qu'il comporte les étapes suivantes :
- on réalise l'armature (1) de volant avec la coupelle de réception (2) ;
- on dispose au moins le sac gonflable (3) à l'état plié dans la coupelle;
- on obture l'ouverture de la coupelle (2) à l'aide d'un matériau d'étanchéité (4) déchirable lors du gonflage du sac;
- on dispose l'armature de volant avec sa coupelle (2) munie du sac (3) et du matériau d'étanchéité (4) dans un moule de fabrication du garnissage par injection de matière plastique; et
- on injecte de la matière plastique dans le moule pour former le garnissage (5) autour de l'armature.

2. Procédé selon la revendication 1, caractérisé en ce qu'on obture l'ouverture de la coupelle à l'aide d'un film (4) de matériau d'étanchéité.

3. Procédé selon la revendication 1 ou 2, caractérisé en ce qu'on réalise l'armature de volant avec sa coupelle par moulage par injection d'alliage dans un moule.

## Claims

1. A method for manufacturing a steering wheel, in particular for a motor vehicle, of the type comprising a steering wheel frame (1) provided with an open cup (2) for receiving at least an inflatable bag (3) in its folded state and a padding (5) made of a plastic material, characterized in that it comprises the following steps:
- the steering wheel frame (1) is made together with the receiving cup (2);
- at least the inflatable bag (3) is disposed in its folded state in the cup;
- the opening of the cup (2) is obturated by means of a sealing material (4), tearable during the inflation of the bag;
- the steering wheel frame together with its cup (2) provided with the bag (3) and the sealing material (4) are placed into a mould for producing the padding by the injection moulding of a plastic material; and
- plastic material is injected into the mould for forming the padding (5) round the frame.

2. A method according to claim 1, characterized in that the opening of the cup is obturated by means of a film (4) of a sealing material.

3. A method according to claim 1 or 2, characterized in that the steering wheel frame together with its cup are obtained by the injection moulding of an alloy in a mould.

## Patentansprüche

1. Verfahren zur Herstellung eines Lenkrads insbesondere eines Kraftfahrzeugs, bestehend aus einer Lenkradarmatur (1), die mit einem offenen Topf (2) zur Aufnahme mindestens eines aufblasbaren Sacks (3) in zusammengefaltetem Zustand und mit einer Verkleidung (5) aus Kunststoff versehen ist, dadurch gekennzeichnet, daß es aus den folgenden Schritten besteht:
- Herstellung der Lenkradarmatur (1) mit dem Aufnahmetopf (2),
- Einsetzen mindestens des aufblasbaren Sacks (3) in zusammengefaltetem Zustand in den Topf,
- Verschließen der Öffnung des Topfs (2) mit Hilfe eines beim Aufblasen des Sacks aufreißenden Dichtungsmaterials (4),
- Einsetzen der Lenkradarmatur mit ihrem mit dem Sack (3) und dem Dichtungsmaterial (4) versehenen Topf (2) in eine Form zur Herstellung der Verkleidung durch Spritzgießen von Kunststoff und
- Einspritzen des Kunststoffs in die Form zur Formung der Verkleidung (5) auf der Armatur.

2. Verfahren nach Anspruch 1, dadurch gekennzeichnet, daß die Öffnung des Topfs mit Hilfe einer Folie (4) aus Dichtungsmaterial geschlossen wird.

3. Verfahren nach Anspruch 1 oder 2, dadurch gekennzeichnet, daß die Lenkradarmatur mit ihrem Topf durch Spritzgießen einer Legierung in einer Form hergestellt wird.
